# EUROPEAN PATENT APPLICATION

(11) **EP 1 239 016 A1**
(43) Date of publication of application: **11.09.2002**
(21) Application number: 01105351.9
(22) Date of filing: 08.03.2001
(51) Int. Cl.: C09J 4/06, C09J 175/16, C08F 290/06

(54) **Elastic meth (acrylic) adhesive compositions**

(71) Applicant: Sika AG, vorm. Kaspar Winkler & Co., CH-8048 Zürich (CH)
(72) Inventor: De Cooman, Ria, Dr., 6331 Hünenberg (CH); Flury, René, 4056 Basel (CH); Meyer, Werner R., Dr., 8702 Zollikon (CH)
(74) Representative: Blum, Rudolf Emil Ernst

(57) **Abstract**

Described is an adhesive composition with a high elasticity, measured in terms of elongation at break, and an elastic behavior approaching the ideal Hook law in the stress-strain diagram. Said adhesive composition comprises
(a) at least one monofunctional meth(acrylic) monomer **A** whose homo-polymer or co-polymer exhibit a glass transition temperature (Tg) between 40°C and 140°C,
(b) at least one monofunctional meth(acrylic) monomer **B** of the following structure (B): 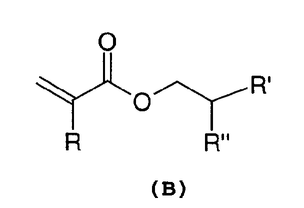
wherein
R is H or CH₃,
R' is H or (CH₂)ₙCH₃, with n = 0 to 2, in particular CH₂CH₃ or H, and
R" is C₃-C₂₀-alkyl or phenoxy or
O-(CH₂)ₙ-CH₃ or O-[(CH₂)₂-O]ₙ-CH₂-CH₃ with n = 0 to 2, in particular (CH₂)ₙCH₃ wherein n is 3 or 10 to 13 , and
c) at least one liquid elastomer **C** in the molecular weight range of 1000 to 9000 with (meth)acrylic derivative groups, preferably (meth)acrylic ester groups,
whereby the components A, B, and C are present in the following amounts:
B based on the total weight of A+B+C = 5 to 20 % by weight,
C based on the total weight of A+C = 30 to 70 % by weight.

## Description

The present invention relates to elastic adhesive compositions.

The long term performance of bonding is dependent on the elastic behavior of the adhesive. The first-generation meth(acrylic) adhesives are brittle, with very low elongation at break. Many approaches are known to increase the flexibility of methacrylic adhesives.

One of said efforts to improve flexibility has led to the addition of solid non-reactive elastomers that are dissolved in the meth(acrylic) monomers. Such compositions are called rubber-toughened adhesive compositions. The elastomers are solids at room temperature, and commercially available as large particles or granulates.

This approach is described in several patent documents, such as: US 3,890,407, US 4,106,971, US 4,263,419, US 3,725,504, US 4,200,480, US 3,994,764, EP 0 641 846. The disadvantage of such formulations is that they can only be mixed homogeneously with special equipment like extruders or kneaders due to the high viscosity of the polymer that is formed in the monomer solution. Moreover, this type of compositions suffers from the limitation that the monomer, or the monomer mixture, must be chosen such that the non-reactive thermoplastic polymer is soluble therein. Practically, methyl methacrylate is the only monomer with high dissolving properties, and thus the only monomer that allows a polymer-in-monomer composition with up to 30% polymer content. Such low molar mass monomers, like methyl methacrylate, have a strong odor and are highly flammable. Polymer-in-monomer compositions resulting from this approach have a rubbery, stringy consistency and a high viscosity that makes their handling difficult. Due to the high viscosity of the mixture, only a limited amount of fillers can be used making the formulation expensive. A high viscosity is also limiting the adhesion of the formulation, as it limits the wetting of the substrate.

A further approach is the addition of *liquid, low- molar mass* elastomers that dissolve in the monomers. A number of patent documents describe such approach to increase the flexibility of the systems by adding liquid reactive elastomers to the reactive monomer (mixtures) to increase the flexility of the adhesives, namely US 4,769,419; US 4,331;765 and EP 0,561,352 disclosing mixtures of monomers and liquid rubber.

DE 2,610,423; US 4,439,600; EP 0,640,672; DE 2,319,637 and US 4 223 115 disclose mixtures of monomers and acrylic functionalised polyurethanes. In US 4,223,115 the composition optionally contains a dissolved elastomer, e.g. NBR (nitrile-butadiene-rubber), polychloroprene.

Flexibility is measured in terms of elongation at break. During deformation, however, all the above mentioned prior-art adhesives show a visco-elastic behavior with a significant viscous component. This means that during the deformation the binder matrix of the adhesive shows plastic flow and is being damaged. The visco-elastic behavior of the material is reflected in the shape of the stress-strain curve, measured at an elongation speed relevant to the practical application. The plot of the prior-art adhesives is not linear, and this even for the compositions of US 4,439,600 (see above) although elastic behavior is claimed. The plastic flow component during deformation reduces the number of deformation cycles an adhesive can perform before failing. This significantly reduces the life span of an adhesive bond under dynamic load.

It was therefore an object of the present invention to provide meth(acrylic) adhesive compositions with a high elasticity, measured in terms of elongation at break, and an elastic behavior approaching the ideal Hook law in the stress-strain diagram.

Thus one object of the present invention is an adhesive composition comprising
(a) at least one monofunctional meth(acrylic) monomer **A** whose homo-polymer or co-polymer exhibit a glass transition temperature (Tg) between 40°C and 140°C,
(b) at least one monofunctional meth(acrylic) monomer **B** of the following structure (B): 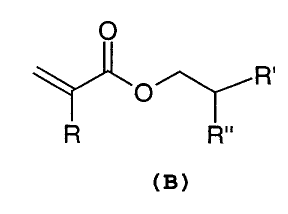
wherein
R is H or CH₃,
R' is H or (CH₂)ₙCH₃, with n = 0 to 2, in particular CH₂CH₃ or H, and
R" is C₃-C₂₀-alkyl or phenoxy or O-(CH₂)ₙ-CH₃, or O-[(CH₂)₂-O]ₙ-CH₂-CH₃ with n = 0 to 2, in particular (CH₂)ₙCH₃, wherein n is 3 or 10-13, and

c) at least one liquid elastomer **C** in the molecular weight range of 1000 to 9000 with (meth)acrylic derivative groups, preferably (meth)acrylic ester groups,
whereby the components A, B, and C are present in the following amounts:
B based on the total weight of A+B+C = 5 to 20 % by weight, preferably 5 to 12 % by weight,
C based on the total weight of A+C = 30 to 70 % by weight, preferably 40 to 60 % by weight.

Much preferred components of structure (B) are those wherein
R' is CH₂CH₃ and R" is (CH₂)₃CH₃ or
R' is H and R" is (CH₂)ₙCH₃ with n = 10-13.

The invention will be better understood and objects other than those set forth above will become apparent when consideration is given to the following description thereof and the annexed Figures, wherein:
**Figure 1** shows a stress-strain diagram for the inventive composition of Example 1.
**Figure 2** shows a stress-strain diagram for the inventive composition of Example 2.
**Figure 3** shows a stress-strain diagram for the inventive composition of Example 3.
**Figure 4** shows a stress-strain diagram for the comparative composition of Example 4.

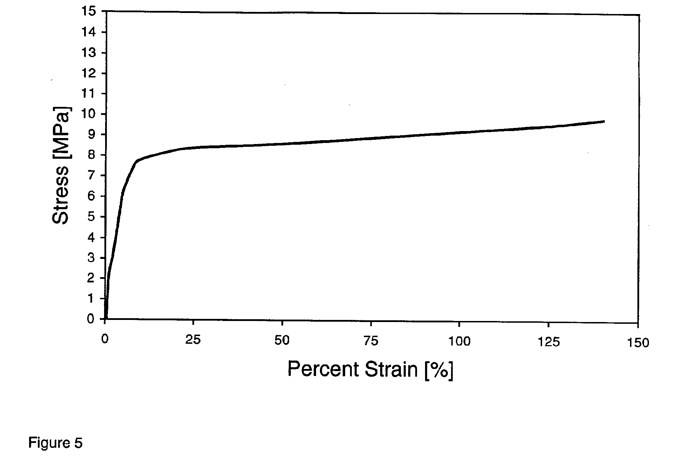

**Figure 5** shows a stress-strain diagram for the state of the art composition of Example 5.

In a preferred embodiments of the inventive adhesive composition, the monofunctional meth(acrylic) monomer A or mixture of meth(acrylic) monomers A whose homo-polymer or co-polymer exhibit a glass transition temperature (Tg) between 40°C and 140°C is a methacrylate ester, preferably an alkyl ester with a linear or branched or cyclic C₁-C₆ alkyl, or a heterocyclic or aromatic ester, much preferred a methacrylate ester selected from the group consisting of methyl methacrylate (MMA), tetrahydrofurfuryl methacrylate (THFMA), cyclohexyl-methacrylate (CHMA), cyclic trimethylolpropane formal acrylate (CTFA), isobornylmethacrylate (IBMA), benzylmethacrylate (BMA), dicyclopentadienyloxyethyl-methacrylate (DCPOEMA), t-butylmethacrylate (tBMA), isobornylacrylate (IBA), dihydrodicyclopentadienylacrylate (DHDCPA), and mixtures thereof.

In another preferred embodiment of the inventive composition, the monofunctional (meth)acrylic monomer B of formula (B) is a (meth)acrylic ester, such as an ester selected from the group consisting of linear and branched C₆-C₁₅-alkyl esters, in particular an acrylic ester such as lauryl acrylate, 2-ethyl hexyl acrylate, and mixtures thereof. Preferred (meth)acrylates lead to homopolymers and copolymers with a preferred Tg of <40°C.

In yet another preferred embodiment, the inventive adhesive composition contains a liquid elastomer C with ethylenically unsaturated groups which is chosen from the group consisting of
- (meth)acrylic functionalized butadiene, isoprene based polymer or block-copolymer,
- PU-(meth)acrylate obtainable through the syntheses of a polyethylene polyol or polypropylene polyol, a diisocyanate and a hydroxy functionalyzed ethylenically unsaturated monomer, whereby said PU (meth)acrylate is preferably obtainable through a synthesis using polyols with low unsaturation and narrow molecular weight distribution as obtainable through double metal cyanide complex catalysis (such polyols are e.g. known as Acclaim polyols).

The compositions of the present invention usually also comprise at least one initiator and/or catalyst, as well as preferably also at least one organic or inorganic filler or thixotropic agent. The compositions can also comprise further substances, such as stabilizers, additives, toughening agents, adhesion promotors, impact modifiers, core-shell polymers, defoaming agents, thickeners, plasticizers, wetting agents, wax compounds,cross-linking agents, inhibitors etc. Such additional substances are known to the skilled person. Examples for free radical initiators are organic peroxides, in particular benzoylperoxide, and examples for catalysts are tertiary amines and/or salts and/or complexes of transition metals. Examples for tertiary amines are e.g N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, and examples for the salts and complexes of transition metals are salts and complexes of cobalt, nickel and/or copper. Examples for inhibitors are hydrochinone, methylhydrochinone, t-butyl-p-cresol and for thixotropic agents e.g. Aerosil.

A further advantage of the compositions of the present invention is that they can be easily manufactured, namely by simply mixing monomer(s) A, monomer(s) B and liquid elastomer and an initiator and/or catalyst. Said mixture is preferably obtained at ambient temperature for a time sufficient to get a homogeneous liquid (usually about 10 to 20 minutes). Obtaining a homogeneous liquid, e.g. at 40°C, usually takes about 15 minutes. Then, preferably also present filler(s) are added and the composition is mixed at high revolutions per minute until the material shows thixotropic behavior.

The compositions of the present invention are especially suitable for binding applications, in particular bonding applications with materials having different thermal expansion coefficients as they are e.g. found in motor vehicles, e.g. trucks, and rail cars. Examples of such applications are bonding of side panels of trailers or direct glazing.

The ideal elastic behavior over a wide range of elongations obtained with the compositions of the present invention increases significantly the performance of the bond under dynamic load. Furthermore, the compositions show an excellent adhesion on many substrates without pre-treatment, and thus are easy to manufacture due to their low viscosity. The exceptionally high degree of elasticity imparts them excellent impact resistance at low temperatures, even without impact modifiers. Also their close to ideal elastic behavior imparts them an excellent recovery behavior. Their very high elasticity can be maintained even when the formulations are filled with commonly known fillers.

### Examples

In the compositions used in the examples 1 to 5, the abbreviations have the following meanings:
- MMA =: methyl methacrylate
- THFMA =: tetrahydrofuryl methacrylate
- LA =: lauryl acrylate
- PUE =: prepolymer PUA
- p-Tol =: N,N-bis(2-dihydroxyethyl)-p-toluidine
- BPO paste =: a past of 40 % benzoyl peroxide in phthalate plasticizer

The compounds used to formulate the adhesive compositions of examples 1 to 5 and their amounts are listed in Table 1.

### Preparation of Prepolymer PUA

To 800 g of a diol with mw 4000 (e.g. Acclaim 4200 from Bayer), 88.6 g of IPDI (e.g. Vestanat IPDI from Bayer) together with 0.05% of dibutyltin dilaurate (DBTL) are added. The reaction mixture is stirred at 80°C for about 4 hours under nitrogen. Then 64 g of 2- hydroxyethyl methacrylate (HEMA) are added at once, and the mixture is stirred again at 80°C for another 45 minutes. After cooling the NCO value of the reaction product is measured as 0.01.

### Preparation of the adhesive compositions of Examples 1 to 5

Methyl methacrylate, prepolymer PUA, lauryl methacrylate and N,N-bis-(2-hydroxyethyl)-p-toluidine were mixed in a dissolver at 40°C for 15 minutes, until a homogeneous liquid was obtained. Then Aerosil was added and mixed at high revolutions per minute until the material showed thixotropic behavior.

The adhesives were cured by adding 4 % of the BPO paste.

The test results obtained for the cured adhesives are also listed in Table 1.

### The adhesives were tested as follows:

### Tensile strength and Elongation at Break (DIN 53504)

The adhesive was cured to form a sheet of approximately 2.5 mm thickness from which tensile test dumbbells were cut. The stress-strain tests were performed using a rate of 200 mm per minute for measurements at room temperature.

### Tensile Shear Strength (TSS) (DIN EN 1465)

Substrates with a dimension of 100 mm x 25 mm and 2 mm thick in case of aluminium and 4 mm thick in case of ABS were cleaned with isopropanol. The bond thickness is 1.5 mm and the overlap 11.5 mm. The tensile shear strength was measured at 10 mm/min.

**Table 1:**

| ***Designation*** | ***Components*** | ***Example 1 [w*/*w%]*** | ***Example 2 [w*/*w%]*** | ***Example 3 [w*/*w%]*** | ***Example 4 [w*/*w%]*** | ***Example 5 [w*/*w%]*** |
|---|---|---|---|---|---|---|
| A | MMA | 40 | 38 | | 20 | |
| A | THFMA | | | 40 | | 70 |
| B | LA | 8 | 10 | 8 | 10 | |
| C | PUA | 40 | 42 | 41 | 60 | 18 |
| | p-Tol | 2 | 2 | 2 | 2 | 2 |
| | Aerosil 200 | 10 | | 9 | 8 | 10 |
| | | | | | | |
| Tensile Strength [MPa] | | 9.5 | 7 | 7.8 | 13 | 9.8 |
| Elongation at Break [%] | | 243 | 224 | 293 | 224 | 140 |
| TSS ALMg3 [MPa] | | 6.4 | n.d. | n.d. | n.d. | n.d. |
| TSS ABS [MPa] | | 4.5 | n.d. | n.d. | n.d. | n.d. |
| n.d. = not determined | | | | | | |

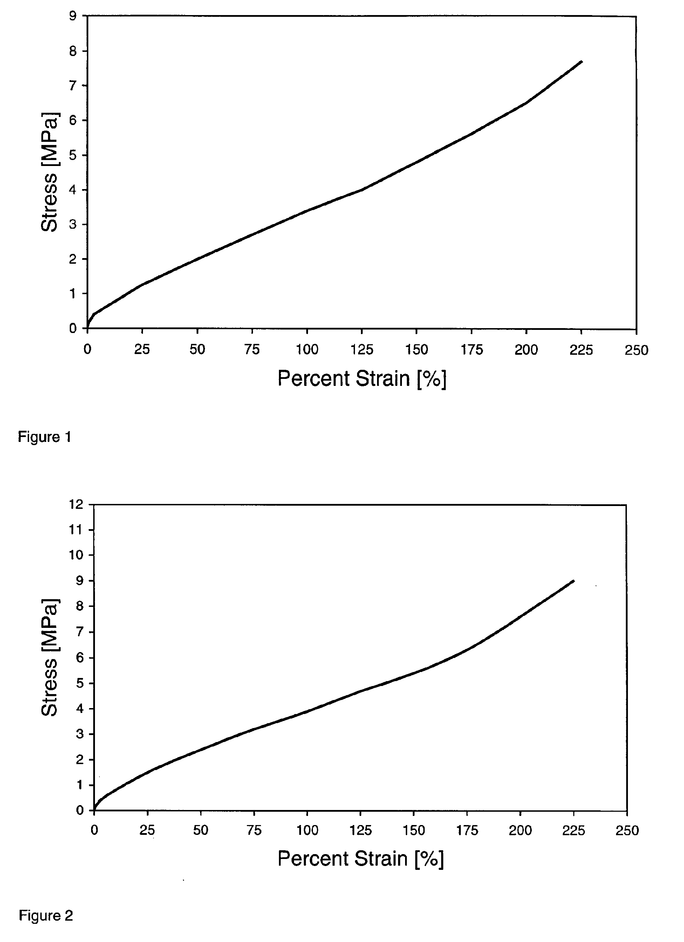

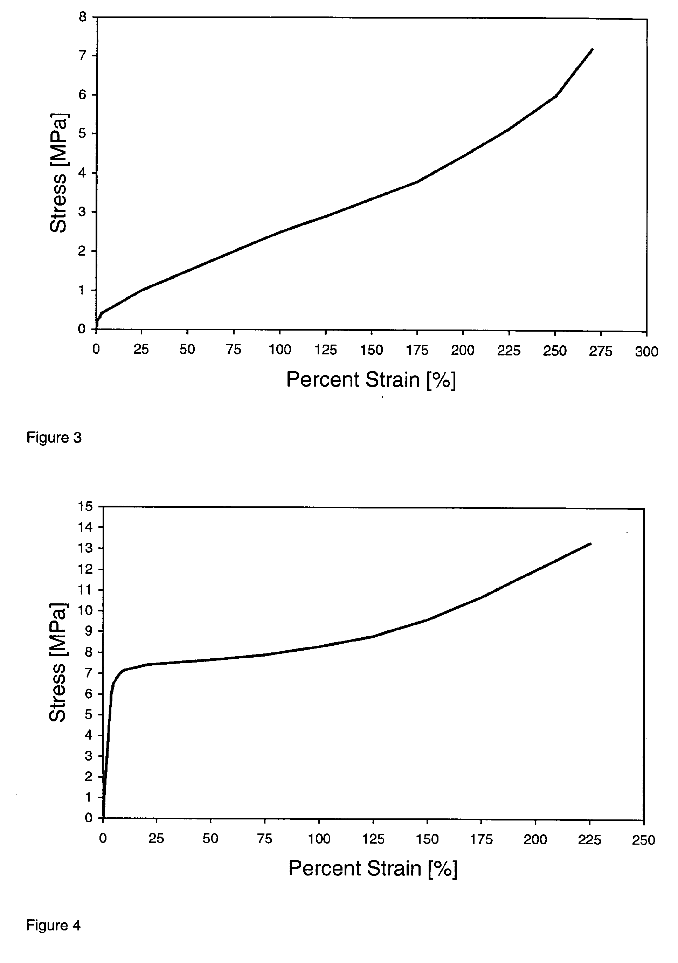

Examples 1 to 4 all have a high tensile strength and a high elongation at break. Only examples 1 to 3 exhibit an elastic behaviour which approaches the ideal Hook law. The stress strain curves shown in Figures 1 to 3 are linear. Example 4 contains a larger amount of liquid elastomer C than is described in the present invention. The composition of example 4 has a stress strain curve which is only linear up to about 5 %. Although this composition has an elongation at break of up to 200%, it does not exhibits an elastic behaviour. Example 5 represents a state of the art composition. The stress strain plot of Example 5 is not linear, and therefore, this adhesive is not elastic.

## Claims

1. An adhesive composition comprising
(a) at least one monofunctional meth(acrylic) monomer **A** whose homo-polymer or co-polymer exhibit a glass transition temperature (Tg) between 40°C and 140°C,
(b) at least one monofunctional meth(acrylic) monomer **B** of the following structure (B): 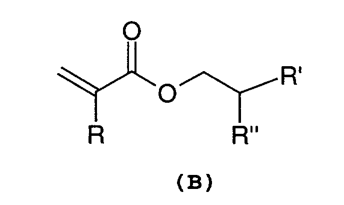 wherein
R is H or CH₃,
R' is H or (CH₂)ₙCH₃, with n = 0 to 2, in particular CH₂CH₃ or H, and
R" is C₃-C₂₀-alkyl or phenoxy or O-(CH₂)ₙ-CH₃, or O-[(CH₂)₂-O]ₙ-CH₂-CH₃ with n = 0 to 2, in particular (CH₂)ₙCH₃ with n = 3 or 10 to 13, and
c) at least one liquid elastomer **C** in the molecular weight range of 1000 to 9000 with (meth)acrylic derivative groups,
whereby the components A, B, and C are present in the following amounts:
B based on the total weight of A+B+C = 5 to 20 % by weight,
C based on the total weight of A+C = 30 to 70 % by weight.

2. The adhesive composition of claim 1, wherein the at least one monomer A is selected from (meth)acrylic esters, in particular linear or branched or cyclic C₁-C₆-alkyl esters, or heterocyclic or aromatic esters, much preferred the group consisting of methyl methacrylate, tetrahydrofurfuryl methacrylate, cyclohexylmethacrylate, cyclic trimethylolpropane formal acrylate, isobornylmethacrylate, benzylmethacrylate, dicyclopentadienyloxyethylmethacrylate, t-butylmethacrylate, isobornylacrylate, dihydrodicyclopentadienylacrylate (DHDCPA), and mixtures thereof, in particular methyl methacrylate, tetrahydrofurfuryl methacrylate, and mixtures thereof.

3. The adhesive composition of claim 1 or 2, wherein the at least one monomer B is selected from linear or branched C₆-C₁₅-alkyl esters, in particular from the esters wherein
R' is CH₂CH₃ and R" is (CH₂)₃CH_{3,} or
R' is H and R" is (CH₂)ₙCH₃ with n = 10-13, much preferred n = 10,
or mixtures thereof.

4. The adhesive composition of claim 3 wherein the one or more (meth)acrylate ester(s) are one or more acrylate ester(s), preferably lauryl acrylate, 2-ethyl hexyl acrylate, or mixtures thereof.

5. The adhesive composition of anyone of the preceding claims, wherein the ethylenically unsaturated (meth)acrylic groups of the liquid elastomer C are chosen from the group consisting of
- (meth)acrylic functionalized butadiene, isoprene based polymer or block-copolymer,
- PU-(meth)acrylate obtainable through the syntheses of a polyethylene polyol or polypropylene polyol, a diisocyanate and a hydroxy functionalyzed ethylenically unsaturated monomer.

6. The adhesive composition of claim 5, wherein the PU-(meth)acrylate is obtainable through a synthesis using polyols with low unsaturation and narrow molecular weight distribution as obtainable through double metal cyanide complex catalysis.

7. The adhesive composition of anyone of the preceding claims, wherein the amount of B based on the total weight of A+B+C = 5 to 12 % by weight.

8. The adhesive composition of anyone of the preceding claims, wherein the amount of C based on the total weight of A+C = 40 to 60 % by weight.

9. The adhesive composition of anyone of the preceding claims that furthermore contains at least one initiator, preferably an organic peroxide and/or at least one catalyst, preferably selected from the group consisting of tertiary amines and salts of transition metals and complexes of transition metals.

10. The adhesive composition of claim 9 wherein the initiator is benzoylperoxide, and/or the tertiary amine is selected from the group consisting of N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, or the salts and complexes of transition metals are selected from the group consisting of salts and complexes of cobalt, nickel, copper and mixtures thereof.

11. The adhesive composition of anyone of the preceding claims that contains at least one further compound, in particular a filler or thixotropic agent.

12. Use of an adhesive composition of anyone of claims 1 to 11 for bonding applications with materials having different thermal expansion coefficients, in particular for bonding applications in motor vehicles including trucks, and in rail cars, e.g. for bonding of side panels of trailers or direct glazing.
